# EUROPÄISCHE PATENTANMELDUNG

(11) **EP 4 600 090 A1**
(43) Veröffentlichungstag der Anmeldung: **13.08.2025**
(21) Anmeldenummer: 25150810.7
(22) Anmeldetag: 09.01.2025
(51) Int. Cl.: B60R 1/29, B60R 11/04, G02B 5/04, G02B 19/00, H04N 7/18

(54) **FAHRZEUGINNENRAUMÜBERWACHUNGSVORRICHTUNG**

(30) Priorität: 12.02.2024 DE 102024201249
(71) Anmelder: Continental Automotive Technologies GmbH, 30175 Hannover (DE)
(72) Erfinder: Naujack, Daniel, 30175 Hannover (DE); Gottwald, Martin, 30175 Hannover (DE)
(74) Vertreter: Aumovio Corporation

(57) **Zusammenfassung**

Die Erfindung betrifft eine Fahrzeuginnenraumüberwachungsvorrichtung, ein Fahrzeuginnenraumüberwachungssystem, ein Display mit einer Fahrzeuginnenraumüberwachungsvorrichtung sowie ein Fahrzeug, welches eine solche Fahrzeuginnenraumüberwachungsvorrichtung aufweist. Die Fahrzeuginnenraumüberwachungsvorrichtung (1) weist einen für den sichtbaren Wellenlängenbereich transparenten Körper (2) auf, welcher eine Vielzahl von Flächen und eine Vielzahl von Kanten aufweist. Jeweils benachbart angeordnete Flächen des Körpers (2) stehen winkelig zueinander an. Ferner weist die Fahrzeuginnenraumüberwachungsvorrichtung (1) eine Kamera (3) auf, welche im sichtbaren Wellenlängenbereich arbeitet. Die Kamera (3) weist ein Objektiv (4) und einen Bildsensor auf, wobei das Objektiv (4) dazu ausgestaltet ist, Bilder auf den Bildsensor zu projizieren. Der für den sichtbaren Wellenlängenbereich transparente Körper (2) ist auf dem Objektiv (4) angeordnet und Körper (2) und Objektiv (4) sind derart ausgestaltet und zueinander angeordnet, dass auf das Objektiv (4) auftreffendes Licht eine Vielzahl der winkelig zueinander angestellten Flächen des transparenten Körpers passiert.

## Beschreibung

Die Erfindung betrifft eine Fahrzeuginnenraumüberwachungsvorrichtung, ein Fahrzeuginnenraumüberwachungssystem, ein Display mit einer Fahrzeuginnenraumüberwachungsvorrichtung sowie ein Fahrzeug, welches eine solche Fahrzeuginnenraumüberwachungsvorrichtung aufweist.

Aus dem Stand der Technik sind Fahrzeuginnenraumüberwachungsvorrichtungen, welche eine RGB-Kamera nutzen und im Inneren eines Fahrzeugs verbaut sind bekannt. Beispielsweise ist es bekannt ein Kameraobjektiv, welches Farbbilder auf einen Bildsensor projiziert, hinter einer klaren, transparenten Scheibe zu verbauen. Dadurch sind jedoch die Kamera bzw. insbesondere das Kameraobjektiv für Fahrzeuginsassen sichtbar und auch klar als solche bzw. solches erkennbar.

Probleme von sichtbar verbauten Kameras insbesondere Kameraobjektiven gehen mit einer mangelnden Akzeptanz von Fahrzeuginsassen bzw. Fahrern einher, da sie sich beobachtet fühlen können.

Es existieren bereits Lösungen, bei welchen Infrarotkameras hinter Flächen verbaut werden, deren Material lediglich transparent für einen infraroten Wellenlängenbereich sind, nicht jedoch für Wellenlängen im sichtbaren Bereich. Solche Infrarotkameras und deren Bauteile, wie etwa ein Kameraobjektiv, lassen sich daher einfach vor dem Blick von Fahrzeuginsassen hinter entsprechenden Flächen verstecken und kaschieren.

Aufgabe der Erfindung ist es daher eine Fahrzeuginnenraumüberwachungsvorrichtung bereitzustellen, welche im sichtbaren Wellenlängenbereich arbeitet, und bei welcher zumindest ein Teil selbiger derart versteckt oder kaschiert ist, dass zumindest dieser Teil für Fahrzeuginsassen nicht direkt sichtbar und als Kamera erkennbar ist.

Gelöst wird diese Aufgabe durch eine Fahrzeuginnenraumüberwachungsvorrichtung, ein Fahrzeuginnenraumüberwachungssystem, sowie ein Fahrzeug gemäß den unabhängigen Ansprüchen. Bevorzugte Ausgestaltungen der Erfindung sind Gegenstand der abhängigen Ansprüche.

Gemäß einem ersten Aspekt der vorliegenden Erfindung weist eine Fahrzeuginnenraumüberwachungsvorrichtung einen für den sichtbaren Wellenlängenbereich transparenten Körper auf, welcher eine Vielzahl von Flächen und eine Vielzahl von Kanten aufweist. Bei diesem Körper stehen benachbart angeordnete Flächen des Körpers winkelig zueinander. Mit anderen Worten sind bei diesem Körper benachbart angeordnete Flächen des Körpers winkelig zueinander angeordnet. Dadurch können die Flächen und Kanten derart zueinander angestellt sein, dass Licht welches auf den Körper trifft vielfältig gebrochen wird und ein Inneres des Körpers verdeckt bzw. kaschiert wird. Ferner weist die Fahrzeuginnenraumüberwachungsvorrichtung eine Kamera auf, welche im sichtbaren Wellenlängenbereich arbeitet. Die Kamera weist ein Objektiv und einen Bildsensor auf. Das Objektiv ist dazu ausgestaltet, Bilder auf den Bildsensor zu projizieren. Sowohl das Objektiv als auch der Bildsensor sind für den sichtbaren Wellenlängenbereich ausgestaltet und werden in diesem betrieben. Die auf den Sensor projizierten Bilder können von dem Sensor als Informationen, insbesondere als gepixelte Bildinformationen, bspw. an eine Recheneinheit wie etwa einen Prozessor zur Weiterverarbeitung der Informationen weitergegeben werden. Ferner ist der für den sichtbaren Wellenlängenbereich transparente Körper auf dem Objektiv angeordnet, so dass der Körper zwischen Objektiv und einem Fahrzeuginsassen angeordnet ist. Transparenter Körper und Objektiv sind dabei derart ausgestaltet und zueinander angeordnet, dass auf das Objektiv auftreffendes Licht eine Vielzahl der winkelig zueinander angestellten Flächen des transparenten Körpers passiert. Einfallendes Licht wird somit an den winkelig zueinanderstehenden Flächen unterschiedlich gebrochen und liefert in einem einzelnen Bild Informationen von einfallendem Licht, welches aus unterschiedlichen Richtungen kommt.

Durch die Vielzahl winkelig zueinander angestellter Flächen ist das Objektiv und vorzugsweise die gesamte Kamera hinter dem transparenten Körper derart versteckt oder von diesem kaschiert, dass zumindest das Objektiv für Fahrzeuginsassen nicht direkt sichtbar und als Teil einer Kamera erkennbar ist. Dadurch wird das Kameraobjektiv bzw. die Kamera derart versteckt, dass ein Fahrzeuginsasse die Kamera oder zumindest Teile der Kamera wie etwa das Objektiv nicht mehr als solche bzw. solches wahrnimmt. Trotzdem hat die Kamera durch den Körper einen uneingeschränkten Blick auf den Innenraum und die Insassen. Es kann somit sehr einfach eine Kamera, welche im sichtbaren Wellenlängenbereich arbeitet, im Innenraum eines Fahrzeugs versteckt werden.

Beispielsweise kann die Kamera hinter dem transparenten Körper am Dashboard an einem Display, etwa einem Zentraldisplay oder aber auch an einem Display oder einem Kombiinstrument hinter dem Lenkrad verbaut sein. Es kann Teil der Instrumententafel sein oder an einer anderen sinnvollen Stelle im Fahrzeug eingesetzt werden, z.B. als Applikation auf einem Displayglas.

Gemäß einer Ausführungsform der vorliegenden Erfindung weist der transparente Körper die Form eines Kristalls oder eines Diamanten auf. Ein Vorteil eines solch ausgestalteten Körpers ist, dass der Körper einen Blickfang im Fahrzeug darstellt, welcher gerne betrachtet wird. Ein solcher Körper kann bewusst im Fahrzeug platziert und als Designelement ausgeführt werden, eine besondere Anmutung aufweisen und so das Innere des Fahrzeugs aufwerten. Der Körper kann sowohl ein Echtteil (Kristall, Diamant) sein, als auch ein eine entsprechende Form aufweisender, aus einem anderen Material bestehender Körper. Der Körper kann z.B. ein aus einem Glas geschliffener Körper in Form eines Diamanten sein und ein Teil der Instrumententafel eines Fahrzeugs sein oder an einer anderen sinnvollen Stelle im Fahrzeug eingesetzt werden, z.B. als Applikation auf einem Displayglas. Das Objektiv und vorteilhafterweise die gesamte Kamera bleibt jedoch aufgrund der Ausgestaltung des Körpers hinter selbigem versteckt.

Gemäß einer weiteren Ausführungsform der vorliegenden Erfindung weist der transparente Körper eine Aushöhlung auf, in welcher zumindest das Objektiv angeordnet ist. Durch eine derartige Ausgestaltung lässt sich das Objektiv noch einfacher hinter bzw. in dem transparenten Körper verstecken. Das Objektiv ragt durch diese Ausgestaltung zudem etwas aus der Ebene heraus, auf der der transparente Körper angeordnet ist, so dass das Objektiv einen größeren Winkelbereich abdecken kann.

Gemäß einer noch weiteren Ausführungsform der vorliegenden Erfindung sind Körper und Objektiv derart ausgestaltet und zueinander angeordnet, dass zumindest eine der Vielzahl an Flächen in Richtung zumindest eines Insassen ausgerichtet ist. Die Vielzahl der Flächen kann derart ausgestaltet sein, dass die Brechung des einfallenden Lichts durch die Flächen so ausgenutzt wird, um verschiedene Bereiche des Fahrzeuginnenraums überwachen zu können. Z.B. können so insbesondere mehrere Fahrzeuginsassen zeitgleich überwacht werden. So ist es beispielsweise möglich, die Flächen des Körpers derart winkelig auszugestalten, dass bspw. eine an einem Zentraldisplay verbaute Kamera sowohl den Fahrer als auch den Beifahrer beobachten kann. Beispielsweise kann der Körper facettenartig mit einer Vielzahl facettenartig angeordneter Flächen ausgestaltet sein. Die facettenartigen Flächen können dabei derart ausgeführt sein, dass man das Objektiv bzw. die gesamte Kamera hinter dem transparenten Körper nicht mehr als solches bzw. solche wahrnimmt.

Gemäß einem weiteren Aspekt betrifft die vorliegende Erfindung ein Fahrzeuginnenraumüberwachungssystem mit einer zuvor beschriebenen Fahrzeuginnenraumüberwachungsvorrichtung und einem Prozessor, welcher dazu ausgestaltet ist, Informationen von dem Bildsensor zu empfangen und diese zu verarbeiten. Dadurch dass transparenter Körper und Objektiv der Fahrzeuginnenraumüberwachungsvorrichtung derart ausgestaltet und zueinander angeordnet sind, dass das Objektiv auf eine Vielzahl winkelig zueinander angestellter Flächen des Körpers ausgerichtet ist, wird auf den transparenten Körper einfallendes Licht an den winkelig zueinanderstehenden Flächen unterschiedlich gebrochen. Dadurch werden in einem einzelnen von dem Sensor empfangenen Bild Informationen aufgenommen, welche von einfallendem Licht aus unterschiedlichen Richtungen kommt. Der Prozessor kann vorteilhafterweise derart ausgestaltet sein, z.B. programmiert sein oder ein Programm enthalten, diese Informationen von einfallendem Licht aus unterschiedlichen Richtungen derart zu verarbeiten, dass aus Informationen auch eines Einzelbildes, welche der Sensor bereitstellt, gezielt mehrere Informationen aus unterschiedlichen Raumwinkeln bereitgestellt werden können, bspw. um zeitgleich einen Fahrer und einen Beifahrer zu überwachen oder zusätzlich unterschiedliche Stellen im Fahrzeuginnenraum.

In einer Ausführungsform kann der Prozessor derart ausgestaltet und eingerichtet sein, dass er eine einzelne empfangene Bildinformation in Einzelbilder derart zerlegt und aufbereitet, dass zumindest ein erstes Einzelbild Informationen über den Fahrer aufweist und zumindest ein zweites Einzelbild Informationen über einen zweiten Fahrzeuginsassen oder den Fahrzeuginnenraum.

Gemäß einem weiteren Aspekt betrifft die vorliegende Erfindung ein Display mit einer zuvor beschriebenen Fahrzeuginnenraumüberwachungsvorrichtung. Durch die zuvor beschriebene Fahrzeuginnenraumüberwachungsvorrichtung lassen sich Displays für Fahrzeuge weiter in ihrem Erscheinungsbild aufwerten. Eine derart am Display versteckte Kamera ermöglicht eine höhere Akzeptanz bei einer bereits beschriebenen Aufwertung einer Anmutung eines solchen Displays.

Gemäß einem noch weiteren Aspekt betrifft die vorliegende Erfindung ein Fahrzeug mit einer zuvor beschriebenen Fahrzeuginnenraumüberwachungsvorrichtung, einem zuvor beschriebenen Fahrzeuginnenraumüberwachungssystem bzw. einem zuvor beschriebenen Display mit Fahrzeuginnenraumüberwachungsvorrichtung.

Die Erfindung wird nachfolgend anhand der Figuren näher erläutert.

Es zeigen:
- Figur 1: eine Seitenansicht eines ersten Ausführungsbeispiels einer Fahrzeuginnenraumüberwachungsvorrichtung,
- Figur 2: eine perspektivische Ansicht eines Körpers des Ausführungsbeispiels in Fig. 1,
- Figur 3: eine perspektivische Ansicht eines Innenraums eines Frontbereichs eines Fahrzeugs mit einer an einem Zentraldisplay verbauten Fahrzeuginnenraumüberwachungsvorrichtung gemäß Figur 1 welche als Teil eines Fahrzeuginnenraumüberwachungssystems ausgestaltet ist, und
- Figur 4: Frontansichten von unterschiedlichen Verwirklichungen eines Körpers für eine Fahrzeuginnenraumüberwachungsvorrichtung.

Zum besseren Verständnis der Prinzipien der vorliegenden Erfindung werden nachfolgend Ausführungsbeispiele der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsbeispiele beschränkt und dass die beschriebenen Merkmale auch kombiniert oder modifiziert werden können, ohne den Schutzbereich der Erfindung zu verlassen, wie er in den angehängten Ansprüchen definiert ist.

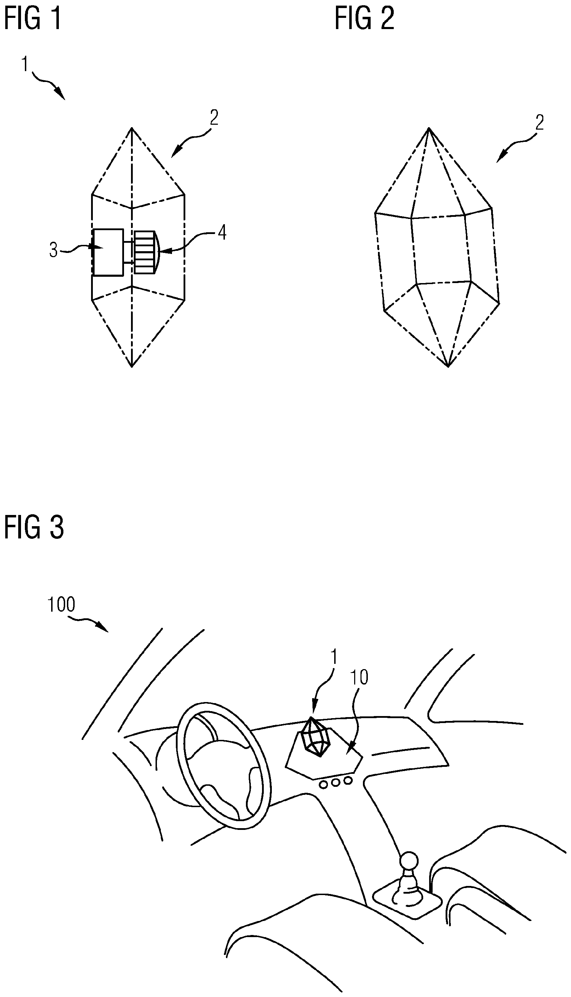

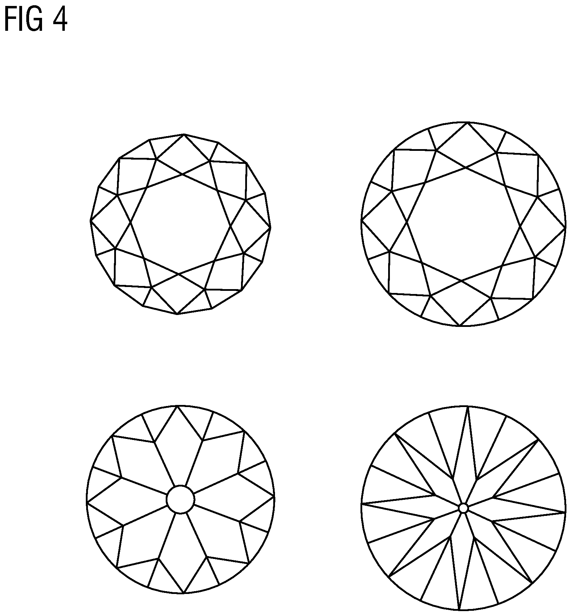

In Figur 1 ist eine Seitenansicht eines ersten Ausführungsbeispiels einer Fahrzeuginnenraumüberwachungsvorrichtung 1 gezeigt. Die Fahrzeuginnenraumüberwachungsvorrichtung 1 weist einen Körper 2 auf, der für den sichtbaren Wellenlängenbereich transparent ist und welcher in einer perspektivischen Ansicht in Fig. 2 dargestellt ist. Wie ersichtlich weist der Körper eine Vielzahl von Flächen und eine Vielzahl von Kanten auf, wobei benachbart angeordnete Flächen des Körpers 2 an ihrer gemeinsamen Kante winkelig zueinander angeordnet, also nichtparallel sind. Der Körper 2 ist aus einem Glas geschliffen und sieht aus wie ein Diamant, der sich harmonisch in eine Innenraumgestaltung eines Fahrzeugs einfügen lässt. Weitere beispielhafte Ausgestaltungs- und Schliffmöglichkeiten für einen transparenten Körper sind in Fig. 4 dargestellt.

Ferner weist die Fahrzeuginnenraumüberwachungsvorrichtung 1 in Fig. 1 eine Kamera 3 auf mit einem Objektiv 4 und einem Bildsensor (nicht sichtbar dargestellt). Die Kamera 3 arbeitet im sichtbaren Wellenlängenbereich. Mit anderen Worten ist der Bildsensor sensitiv im sichtbaren Wellenlängenbereich und das Objektiv 4 ist dazu ausgestaltet, Bilder im sichtbaren Wellenlängenbereich auf den Bildsensor zu projizieren. Der für den sichtbaren Wellenlängenbereich transparente Körper 2 weist eine Aushöhlung auf, in welcher das Objektiv 4 angeordnet ist. Der für den sichtbaren Wellenlängenbereich transparente Körper 2 ist somit derart auf dem Objektiv 4 angeordnet, dass das Objektiv 4 auf einer von einem Fahrzeuginsassen abgewandten Seite des Körpers 2 angeordnet ist.

Körper 2 und Objektiv 4 sind zudem derart ausgestaltet und zueinander angeordnet, dass auf das Objektiv 4 auftreffendes Licht eine Vielzahl der winkelig zueinander angestellten Flächen des Körpers passiert. Ferner sind der Körper 2 und das Objektiv 4 derart ausgestaltet und zueinander angeordnet, dass zumindest eine der Vielzahl an Flächen in Richtung zumindest eines Fahrzeuginsassen ausgerichtet ist.

Fig. 3 ist eine perspektivische Ansicht eines Innenraums eines Frontbereichs eines Fahrzeugs 100 mit einer an einem Display 10, hier ein Zentraldisplay, verbauten Fahrzeuginnenraumüberwachungsvorrichtung 1 welche in Fig. 1 dargestellt ist. Die in Fig. 3 dargestellte Fahrzeuginnenraumüberwachungsvorrichtung 1 ist Teil eines Fahrzeuginnenraumüberwachungssystems (nicht näher dargestellt). Das Fahrzeuginnenraumüberwachungssystem weist die Fahrzeuginnenraumüberwachungsvorrichtung 1 und zusätzlich einen Prozessor (nicht dargestellt) auf. Der Prozessor ist dazu ausgestaltet Informationen von dem Bildsensor zu empfangen und diese zu verarbeiten. Insbesondere ist der Prozessor derart ausgestaltet und eingerichtet, eine einzelne empfangene Bildinformation in Einzelbilder derart zu zerlegen und aufzubereiten, dass zumindest ein erstes Einzelbild Informationen über den Fahrer aufweist und zumindest ein zweites Einzelbild Informationen über einen zweiten Fahrzeuginsassen oder den Fahrzeuginnenraum aufweist.

Beispielsweise nimmt der Bildsensor ein Bild vom Fahrzeuginnenraum ohne Fahrer auf, welches der Prozessor als Referenzbild speichert. Befindet sich ein Fahrer im Fahrzeuginnenraum, so wird das Referenzbild von der aktuell vom Bildsensor gelieferten Bildinformation subtrahiert. Der Prozessor wertet dann die Differenzinformation aus, die im Wesentlichen vom Fahrer stammende Bildinformationen enthält. Ebenso wird ein weiteres Referenzbild vom Fahrzeuginnenraum mit Fahrer gespeichert, welches dann zur Anwendung kommt, wenn ein weiterer Fahrzeuginsasse hinzugekommen ist. Entsprechend kann bei weiteren Änderungen der Belegung des Fahrzeuginnenraums vorgegangen werden. Durch diese oder andere geeignete Auswertung bzw. Nachbearbeitung der Bildinformation im Prozessor kann auf einen speziell gestalteten Bildsensor und/oder ein speziell gestaltetes Objektiv verzichtet werden. Stattdessen können kostengünstige Standardkomponenten zum Einsatz kommen.

## Patentansprüche

1. Fahrzeuginnenraumüberwachungsvorrichtung (1) mit:
- einem für den sichtbaren Wellenlängenbereich transparenten Körper (2), welcher eine Vielzahl von Flächen und eine Vielzahl von Kanten aufweist, wobei jeweils benachbart angeordnete Flächen des Körpers (2) winkelig zueinander anstehen, und
- einer Kamera (3), welche im sichtbaren Wellenlängenbereich arbeitet, aufweisend ein Objektiv (4) und einen Bildsensor, wobei das Objektiv (4) dazu ausgestaltet ist, Bilder auf den Bildsensor zu projizieren,
- wobei der für den sichtbaren Wellenlängenbereich transparente Körper (2) auf dem Objektiv (4) angeordnet ist, und
- wobei transparenter Körper (2) und Objektiv (4) derart ausgestaltet und zueinander angeordnet sind, dass auf das Objektiv (4) auftreffendes Licht eine Vielzahl der winkelig zueinander angestellten Flächen des transparenten Körpers (2) passiert.

2. Fahrzeuginnenraumüberwachungsvorrichtung (1) nach Anspruch 1, wobei der transparente Körper (2) die Form eines Kristalls oder eines Diamanten aufweist.

3. Fahrzeuginnenraumüberwachungsvorrichtung (1) nach Anspruch 1 oder Anspruch 2, wobei der Körper (2) eine Aushöhlung aufweist, in welcher zumindest das Objektiv (4) angeordnet ist.

4. Fahrzeuginnenraumüberwachungsvorrichtung (1) nach einem den vorhergehenden Ansprüchen, wobei der Körper (2) und das Objektiv (4) derart ausgestaltet und zueinander angeordnet sind, dass zumindest eine der Vielzahl an Flächen in Richtung zumindest eines Fahrzeuginsassen ausgerichtet ist.

5. Fahrzeuginnenraumüberwachungssystem aufweisend:
- eine Fahrzeuginnenraumüberwachungsvorrichtung nach einem der vorhergehenden Ansprüche und
- einen Prozessor, welcher dazu ausgestaltet ist, Informationen von dem Bildsensor zu empfangen und diese zu verarbeiten.

6. Fahrzeuginnenraumüberwachungssystem nach Anspruch 5, wobei der Prozessor derart ausgestaltet und eingerichtet ist, eine einzelne empfangene Bildinformation in Einzelbilder derart zu zerlegen und aufzubereiten, dass zumindest ein erstes Einzelbild Informationen über den Fahrer aufweist und zumindest ein zweites Einzelbild Informationen über einen zweiten Fahrzeuginsassen oder den Fahrzeuginnenraum.

7. Display (10) mit einer Fahrzeuginnenraumüberwachungsvorrichtung (1) nach einem der Ansprüche 1 bis 4.

8. Fahrzeug (100) mit einer Fahrzeuginnenraumüberwachungsvorrichtung (1) nach einem der Ansprüche 1 bis 4, einem Fahrzeuginnenraumüberwachungssystem nach einem der Ansprüche 5 oder 6, oder einem Display (10) nach Anspruch 7.
